# EUROPÄISCHE PATENTSCHRIFT

(11) **EP 2 619 152 B1**
(45) Veröffentlichungstag und Bekanntmachung des Hinweises auf die Patenterteilung: **15.07.2015**
(21) Anmeldenummer: 11760441.3
(22) Anmeldetag: 12.09.2011
(51) Int. Cl.: C04B 26/02, C04B 28/02, C04B 28/04, C04B 40/00

(54) **BESCHICHTUNGSMITTEL ZUR HERSTELLUNG VON DAUERFLEXIBLEN BESCHICHTUNGEN**
COATING AGENTS FOR PRODUCING PERMANENTLY FLEXIBLE COATINGS
PRODUITS DE REVÊTEMENT POUR RÉALISER DES REVÊTEMENTS À FLEXIBILITÉ PERMANENTE

(30) Priorität: 23.09.2010 DE 102010041293
(43) Veröffentlichungstag der Anmeldung: 31.07.2013
(73) Patentinhaber: Wacker Chemie AG, 81737 München (DE)
(72) Erfinder: HEROLD, Hardy, 84489 Burghausen (DE); SCHICKOR, Roland, 84359 Simbach (DE)
(74) Vertreter: Ege, Markus
(86) Internationale Anmeldenummer: PCT/EP2011/065737
(87) Internationale Veröffentlichungsnummer: WO 2012/038288

(56) Entgegenhaltungen:
- EP-A1- 1 420 001
- EP-A2- 1 614 670
- WO-A1-2004/092094
- DE-A1- 10 101 314
- DE-A1- 19 620 817
- DE-A1-102005 053 336
- US-A- 4 430 463

## Beschreibung

Die Erfindung betrifft Beschichtungsmittel auf Basis von mineralischen Bindemitteln, Polymeren und Füllstoffen, Verfahren zur Herstellung von Beschichtungen sowie in Wasser redispergierbare Dispersionspulverzusammensetzungen, Verfahren zu deren Herstellung und deren Einsatz in den vorgenannten Beschichtungsmitteln.

Im Baubereich sind Beschichtungsmittel auf Basis von mineralischen Bindemitteln, Polymeren und Füllstoffen zur Herstellung von flexiblen Beschichtungen weit verbreitet. Derartige Beschichtungsmittel werden beispielsweise als Dichtungsschlämme eingesetzt, wie in der US 6166113 oder der DE-A 19620817 beschrieben. Aus der US 4710526 sind Mörtelzusammensetzungen auf Basis von Zement und kationischen Polymeren zur Herstellung von flexiblen Beschichtungen mit guten adhesiven Eigenschaften bekannt. Die KR 100913255 beschreibt zementäre, Polymer-modifizierte Mörtelzusammensetzungen zur Herstellung von Bauprodukten mit einer höheren mechanischen und chemischen Beständigkeit. Die GB 1236263 offenbart Zusammensetzungen auf Basis von mineralischen Bindemitteln, Füllstoffen und Polymeren sowie Additiven, wie Hydroxy-Carbonsäuren. Die US 5543188 empfiehlt Membranen enthaltend eine Polymerschicht, die mit zementären Trockenmischungen imprägniert sind. Die US 2008/0060299 und die US 2006/0054059 beschreiben flexible Membrane auf Basis von Kunststoffmatten, die mit flexiblen zementären, polymermodifizierten Beschichtungen versehen sind. Die US 5484478 empfiehlt Phosphpinsäure-Einheiten enthaltende Polycarbonsäuren als Abbindeverzögerer von zementären Dichtungsschlämmen und deren Einsatz bei der Erdölförderung. Die DE 10101314 A1 offenbart emissionsarme Klebstoffe zum Verkleben von Wand-, Decken- oder Bodenbelägen, wie PVC- oder Parkettböden, bestehend aus einer Pulverkomponente (A) enthaltend bestimmte Mengen an Portlandzement, Tonerdeschmelzzement und Calciumsulfat, ferromagnetischem Eisenpulver, oberflächenmodifizierten Silicaten, Hydroxycarbonsäuren, Tensiden, Entschäumern sowie bestimmen Mengen an einer Flüssigkomponente (B) in Form einer Kunstharzdispersion basierend auf Polymerisaten von ethylenisch ungesättigten Monomeren. Die EP 1420001 A1 offenbart Polymerpulver-Zusammensetzungen mit abbindebeschleunigender Wirkung für hydraulisch abbindende Klebstoffe oder Beschichtungsmittel, wie Fliesenkleber, Spachtelmassen oder Beton. Die Polymerpulver-Zusammensetzungen enthalten Polymere auf Basis ethylenisch ungesättigter Monomere, Schutzkolloide und bestimmte Stickstoff-Verbindungen, die gegebenenfalls in Form ihrer Salze vorliegen, beispielsweise als Ameisensäure- oder Essigsäure-Salze. ben, Schwindprozessen, hygrothermischen Längenänderungen, Alterungsprozessen oder sonstigen mechanischen Belastungen entstehen. Die flexiblen Beschichtungen sollen derartige Risse überbrücken und auf diese Weise ein Eindringen von Wasser in die Substrate unterbinden. Wenn nun aber die Beschichtungen verspröden und folglich nicht mehr flexibel sind, neigen die Beschichtungen im Laufe der Zeit selbst zur Rissbildung oder nehmen sonstwie Schaden, so dass Wasser durch die Beschichtungen hindurch in die darunterliegenden Substrate eindringen kann, was entsprechende Wasserschäden nach sich zieht. In Folge der Versprödung erfüllen die Beschichtungen also ihren Zweck nicht mehr bzw. nicht mehr hinreichend. Die Versprödung tritt verstärkt auf, wenn die Beschichtungen feuchten oder gar nassen Bedingungen ausgesetzt sind. Mit dauerflexiblen, d.h. dauerhaft flexiblen Beschichtungen sollten derartige Schäden unterbunden werden.

Vor diesem Hintergrund bestand die Aufgabe, Beschichtungsmittel zur Herstellung von dauerflexiblen Beschichtungen bereitzustellen, die hinsichtlich Versprödung, insbesondere auch unter feuchten oder nassen Bedingungen, weniger anfällig und folglich dauerhaft flexibel sind.

Ein Gegenstand der Erfindung sind Beschichtungsmittel auf Basis von einem oder mehreren mineralischen Bindemitteln, einem oder mehreren Polymeren, einem oder mehreren Füllstoffen und gegebenenfalls einem oder mehreren Additiven, dadurch gekennzeichnet, dass die Beschichtungsmittel 0,05 bis 5 Gew.-%, bezogen auf das Trockengewicht der Beschichtungsmittel, an einem oder mehreren Flexibilisierern ausgewählt aus der Gruppe umfassend Hydroxy-Verbindungen mit 1 bis 25 Kohlenstoffatomen, Carbonsäure-Verbindungen mit 2 bis 10 Kohlenstoffatomen oder deren Salze, Hydroxy-Carbonsäure-Verbindungen mit 2 bis 10 Kohlenstoffatomen oder deren Salze, Phosphonsäuren oder deren Salze und Phosphorsäuren oder deren Salze, und 60 bis 98 Gew.-% Polymere, bezogen auf das Trockengewicht der Polymere und der mineralischen Bindemittel, enthalten.

Hydroxy-Verbindungen enthalten im Allgemeinen ein oder mehrere Alkoholgruppen, d.h. eine oder mehrere an Kohlenstoffatome gebundene OH-Gruppen. Carbonsäure-Verbindungen enthalten bekanntermaßen ein oder mehrere -COOH-Gruppen, die vorzugsweise an Kohlenstoffatome gebunden sind. Hydroxy-Carbonsäure-Verbindungen enthalten mindestens eine Alkoholgruppe und mindestens eine COOH-Gruppe. Die Hydroxy-Carbonsäure-Verbindungen können gegebenenfalls in Form von Lactonen vorliegen. Lactone sind intramolekulare, cyclische Ester von Hydroxy-Carbonsäure-Verbindungen, in denen eine Alkoholgruppe und eine Carbonsäure-Gruppe einer Hydroxy-Carbonsäure-Verbindung miteinander unter Ringbildung verknüpft sind und so eine Estergruppe bilden. Hydroxy-Carbonsäure-Verbindungen und deren Lactone können auch nebeneinander vorliegen. Die Hydroxy-, Carbonsäure- oder Hydroxy-Carbonsäure-Verbindungen können gegebenenfalls weitere Gruppen tragen, wie beispielsweise Aldehyd- oder Ketogruppen.

Die Carbonsäure-Verbindungen, Hydroxy-Carbonsäure-Verbindungen, Phosphonsäuren oder Phosphorsäuren können beispielsweise in Form ihrer Alkali-, Erdalkali- oder Ammoniumsalze, wie Natrium-, Kalium-, Magnesium-, Calcium- oder Ammoniak-Salze, vorliegen.

Bevorzugte Flexibilisier sind Hydroxy-Carbonsäure-Verbindungen, Phosphonsäuren oder Phosphorsäuren, oder deren jeweilige Salze.

Die Hydroxy-Verbindungen, enthalten vorzugsweise 2 bis 10 Kohlenstoffatome, besonders bevorzugt 2 bis 8 Kohlenstoffatome und am meisten bevorzugt 2 bis 6 Kohlenstoffatome. Die Carbonsäure-Verbindungen oder die Hydroxy-Carbonsäure-Verbindungen enthalten vorzugsweise 2 bis 8 Kohlenstoffatome und besonders bevorzugt 2 bis 6 Kohlenstoffatome. Vorzugsweise tragen die Hydroxy-Verbindungen oder die Hydroxy-Carbonsäure-Verbindungen 1 bis 6, besonders bevorzugt 1 bis 5 Hydroxy-Gruppen. Vorzugsweise tragen die Carbonsäure-Verbindungen oder die Hydroxy-Carbonsäure-Verbindungen 1 bis 3 Carbonsäure-Gruppen.

Beispiele für geeignete Carbonsäure-Verbindungen sind Oxalsäure, Weinsäure, Gluconsäure, Heptonsäure, Gallussäure, Zitronensäure, Bernsteinsäure, Sebacinsäure, Salicylsäure, Pimelinsäure, Hämatinsäure oder Äpfelsäure. Bevorzugt sind Weinsäure, Gluconsäure und Zitronensäure.

Beispiele für geeignete Hydroxy-Verbindungen sind Pentaerythrit, Sorbit, Sucrose, Glucose, Fructose oder Disaccharide, wie Saccharose. Bevorzugt sind Fructose und Saccharose (Rohrzucker).

Beispiele für geeignete Phosphonsäuren oder Phosphorsäuren oder deren Salze sind Tetranatrium- und Tetrakaliumpyrophosphat, Natriumhexametaphosphat (Grahamsches Salz).

Am meisten bevorzugte Beispiele von Flexibilisierern sind Gluconsäure, Weinsäure und Zitronensäure, oder deren jeweilige Salze.

Als Polymere werden im Allgemeinen Polymerisate von einem oder mehreren ethylenisch ungesättigten Monomeren eingesetzt (Basispolymerisate). Bevorzugte ethylenisch ungesättigte Monomere werden ausgewählt aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomeren.

Geeignete Vinylester sind beispielsweise solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Resolution). Besonders bevorzugt ist Vinylacetat.

Geeignete Monomeren aus der Gruppe Acrylsäureester oder Methacrylsäureester sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0 bis 10 Gew.-%, bezogen auf das Gesamtgewicht des Monomergemisches, Hilfsmonomere copolymerisiert werden. Bevorzugt werden 0,1 bis 5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugt werden ein oder mehrere Polymerisate ausgewählt aus der Gruppe umfassend Vinylester-Homopolymerisate, Vinylester-Mischpolymerisate enthaltend eine oder mehrere Monomereinheiten aus der Gruppe umfassend Vinylester, Olefine, Vinylaromaten, Vinylhalogenide, Acrylsäureester, Methacrylsäureester, Fumar- und/oder Maleinsäuremono- oder -diester; (Meth)acrylsäureester-Homopolymerisate, (Meth)acrylsäureester-Mischpolymerisate enthaltend eine oder mehrere Monomereinheiten aus der Gruppe umfassend Methacrylsäureester, Acrylsäureester, Olefine, Vinylaromaten, Vinylhalogenide, Fumar- und/oder Maleinsäuremono- oder -diester; Homo- oder Mischpolymerisate von Dienen wie Butadien oder Isopren, sowie von Olefinen wie Ethen oder Propen, wobei die Diene beispielsweise mit Styrol, (Meth)acrylsäureestern oder den Estern der Fumar- oder Maleinsäure copolymerisiert sein können; Homo- oder Mischpolymerisate von Vinylaromaten, wie Styrol, Methylstyrol, Vinyltoluol; Homo- oder Mischpolymerisate von Vinylhalogenverbindungen wie Vinylchlorid, wobei die Polymerisate noch Hilfsmonomere enthalten können.

Besonders bevorzugt werden Mischpolymerisate von einem oder mehreren Vinylestern mit 1 bis 50 Gew.-% Ethylen; Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11; Mischpolymerisate von ein oder mehreren Vinylestern, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesonders n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Mischpolymerisate mit ein oder mehreren Vinylestern, 1 bis 50 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Besonders bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch Hilfsmonomere in den genannten Mengen enthalten können, und sich die Angaben in Gew.-% auf jeweils 100 Gew.-% aufaddieren.

Beispiele für besonders bevorzugte Comonomere für Vinylchlorid-Mischpolymerisate sind α-Olefine, wie Ethylen oder Propylen, und/oder Vinylester, wie Vinylacetat, und/oder Acrylsäureester bzw. Methacrylsäureester von Alkoholen mit 1 bis 15 C-Atomen, wie Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat und/oder Fumar- und/oder Maleinsäuremono- oder -diester wie die Dimethyl-, Methyl-t-butyl-, Di-n-butyl-, Di-t-Butyl- und Diethylester der Maleinsäure bzw. Fumarsäure.

Am meisten bevorzugt werden Mischpolymerisate mit Vinylacetat und 5 bis 50 Gew.-% Ethylen; oder Mischpolymerisate mit Vinylacetat, 1 bis 50 Gew.-% Ethylen und 1 bis 50 Gew.-% von einem Vinylester von α-verzweigten Monocarbonsäuren mit 9 bis 11 C-Atomen; oder Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; oder Mischpolymerisate mit Vinylacetat, 5 bis 50 Gew.-% Ethylen und 1 bis 60 Gew.-% Vinylchlorid.

Am meisten bevorzugte Mischpolymerisate sind auch Vinylchlorid-Ethylen-Mischpolymerisate enthaltend 60 bis 98 Gew.-% Vinylchlorideinheiten und 1 bis 40 Gew.-% Ethyleneinheiten, wobei sich die Angaben in Gew.-% auf das Gesamtgewicht des Copolymerisats beziehen und sich jeweils auf 100 Gew.-% addieren. Solche Vinylchlorid-Ethylen-Copolymerisate sind aus EP 0 149 098 A2 bekannt.

Die Monomerauswahl bzw. die Auswahl der Gewichtsanteile der Comonomere erfolgt dabei so, das eine Glasübergangstemperatur Tg von -50°C bis +30°C, vorzugsweise -40°C bis +10°C, besonders bevorzugt -30°C bis 0°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisäte sind in Polymer Handbook 2nd Edition, J. Wiley & Sons, New York (1975) aufgeführt.

Die Herstellung der Polymere erfolgt im Allgemeinen in wässrigem Medium und bevorzugt nach dem Emulsions- oder Suspensionspolymerisationsverfahren - wie beispielsweise in DE-A 102008043988 beschrieben. Die Polymere fallen dabei in Form von wässrigen Dispersionen an. Bei der Polymerisation können die gängigen Schutzkolloide und/oder Emulgatoren eingesetzt werden, wie in der DE-A 102008043988 beschrieben. Die Schutzkolloide können anionisch oder vorzugweise kationisch oder nichtionisch sein. Bevorzugt sind auch Kombinationen von kationischen und nichtionischen Schutzkolloiden. Bevorzugte nichtionische Schutzkolloide sind Polyvinylalkohole. Bevorzugte kationische Schutzkolloide sind Polymere, die ein oder mehrere kationische Ladungen tragen, wie beispielsweise in E. W. Flick, Water Soluble Resins - an Industrial Guide, Noyes Publications, Park Ridge, N.J., 1991, beschrieben. Bevorzugt werden als Schutzkolloide teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 94 Mol-% und einer Höpplerviskosität, in 4 %-iger wässriger Lösung von 1 bis 30 mPas (Methode nach Höppler bei 20°C, DIN 53015). Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Polymere in Form von in Wasser redispergierbaren Polymerpulver sind erhältlich, indem Polymere in Form von wässrigen Dispersionen, gegebenenfalls nach Zusatz von Schutzkolloiden als Trocknungshilfe, getrocknet werden, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt.

In der Regel wird die Trocknungshilfe (Schutzkolloid) in einer Gesamtmenge von 3 bis 30 Gew.-%, bezogen auf die polymeren Bestandteile der Dispersion, eingesetzt. Bevorzugt werden 5 bis 20 Gew.-% bezogen auf den Polymeranteil eingesetzt.

Geeignete Trocknungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Kasein oder Kaseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Trocknungshilfe eingesetzt, wobei die als Schutzkolloide bevorzugten Polyvinylalkohole auch bevorzugt als Trocknungshilfe eingesetzt werden.

Bei der Verdüsung zur Trocknung wässriger Polymerdispersionen hat sich vielfach ein Gehalt von bis zu 3 Gew.-% Antischaummittel, bezogen auf das Basispolymerisat, als günstig erwiesen. Zur Erhöhung der Lagerfähigkeit durch Verbesserung der Verblockungsstabilität, insbesondere bei Polymerpulvern mit niedriger Glasübergangstemperatur, kann das erhaltene Polymerpulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Metakaolin, kalziniertes Kaolin, Silicate mit Teilchengrößen vorzugsweise im Bereich von 10 nm bis 100 µm.

Die Viskosität der zu trocknenden Mischung wird über den Feststoffgehalt so eingestellt, dass ein Wert von < 1500 mPas (Brookfield-Viskosität bei 20 Umdrehungen und 23°C), bevorzugt < 500 mPas, erhalten wird. Der Feststoffgehalt der zu trocknenden Mischung beträgt > 35 %, bevorzugt > 40 %.

Zur Verbesserung der anwendungstechnischen Eigenschaften können bei der Trocknung weitere Zusätze zugegeben werden. Weitere, in bevorzugten Ausführungsformen enthaltene Bestandteile von Dispersionspulverzusammensetzungen sind beispielsweise Pigmente, Füllstoffe, Schaumstabilisatoren, Hydrophobierungsmittel oder Zementverflüssiger.

Ein weiterer Gegenstand der Erfindung sind in Wasser redispergierbare Dispersionspulverzusammensetzungen auf Basis von einem oder mehreren Polymeren von einem oder mehreren ethylenisch ungesättigten Monomeren (Basispolymerisate), dadurch gekennzeichnet, dass ein oder mehrere Flexibilisierer ausgewählt aus der Gruppe umfassend Oxalsäure, Weinsäure, Gluconsäure, Heptonsäure, Gallussäure, Zitronensäure, Bernsteinsäure, Sebacinsäure, Salicylsäure, Pimelinsäure, Hämatinsäure, Äpfelsäure sowie Salze der vorgenannten Säuren und Pentaerythrit, Sorbit, Sucrose, Glucose, Fructose, Disaccharide, Tetranatrium- und Tetrakaliumpyrophosphat und Natriumhexametaphosphat (Grahamsches Salz) enthalten sind.

Der Anteil der Flexibilisierer, bezogen auf das Gesamtgewicht der Dispersionspulverzusammensetzungen, beträgt vorzugsweise 0,025 bis 12,5 Gew.-%, besonders bevorzugt 0,05 bis 7,5 Gew.-% und am meisten bevorzugt 0,125 bis 5 Gew.-%.

Der Anteil der polymeren Bestandteile, bezogen auf das Gesamtgewicht der Dispersionspulverzusammensetzungen, beträgt vorzugsweise 50 bis 99,975 Gew.-%, besonders bevorzugt 70 bis 99,95 Gew.-% und am meisten bevorzugt 80 bis 99,875 Gew.-%. Polymere Bestandteile umfassen die Basispolymere und gegebenenfalls Schutzkolloide.

Ein weiterer Gegenstand der vorliegenden Erfindung sind Verfahren zur Herstellung der in Wasser redispergierbaren Dispersionspulverzusammensetzungen mittels Emulsionspolymerisation oder Suspensionspolymerisation von einem oder mehreren ethylenisch ungesättigten Monomeren in wässrigem Medium und anschließender Trocknung der dabei erhaltenen wässrigen Dispersionen, dadurch gekennzeichnet, dass ein oder mehrere Flexibilisierer ausgewählt aus der Gruppe umfassend Oxalsäure, Weinsäure, Gluconsäure, Heptonsäure, Gallussäure, Zitronensäure, Bernsteinsäure, Sebacinsäure, Salicylsäure, Pimelinsäure, Hämatinsäure, Äpfelsäure sowie Salze der vorgenannten Säuren und Pentaerythrit, Sorbit, Sucrose, Glucose, Fructose, Disaccharide, Tetranatrium- und Tetrakaliumpyrophosphat und Natriumhexametaphosphat (Grahamsches Salz) beigemengt werden.

Die Emulsions- oder Suspensionspolymerisation bzw. die Trocknung können hierbei wie oben beschrieben durchgeführt werden. Dabei können auch die oben genannten Schutzkolloide, Emulgatoren, Trocknungshilfen, Antischaummittel, Antiblockmittel, Zusätze oder sonstigen Bestandteile vorzugsweise in den oben genannten Mengen entsprechenden Einsatz finden.

Die Flexibilisierer können vor der Initiierung der Polymerisation mit den ethylenisch ungesättigten Monomeren vermischt werden. Alternativ dazu können die Flexibilisierer während der Polymerisation der ethylenisch ungesättigten Monomere zugegeben werden. Ebenso kann ein Teil der Flexibilisierer den ethylenisch ungesättigten Monomeren vor der Initiierung der Polymerisation beigemischt werden und der restliche Teil der Flexibilisierer während der Polymerisation der ethylenisch ungesättigten Monomere zugegeben werden.

Bevorzugt erfolgt die Zugabe der Flexibilisierer nach Abschluss der Polymerisation zur entsprechenden Polymerdispersion. Besonders bevorzugt erfolgt die Zugabe der Flexibilisierer vor der Trocknung der Polymerdispersion. Dazu werden ein oder mehrere Flexibilisierer den wässrigen Polymerdispersionen zugegeben, um anschließend die so erhaltenen Mischungen entsprechend der oben ausgeführten Verfahren zur Trocknung zu trocknen. In einer alternativen besonders bevorzugten Ausführungsform können ein oder mehrere Flexibilisierer auch während der Trocknung der wässrigen Polymerdispersionen zugegeben werden.

Alternativ dazu können auch die getrockneten Polymerpulver mit einem oder mehreren Flexibilisierern vermischt werden. Diese Vorgehensweise ist insbesondere dann geeignet, wenn die Flexibilisierer in Form von Feststoffen vorliegen.

Die in Wasser redispergierbaren Dispersionspulverzusammensetzungen enthaltend Flexibilisierer eignen sich in besonders vorteilhafter Weise zum Einsatz in den erfindungsgemäßen Beschichtungsmitteln, da die Polymere und die Flexibilisierer zur Herstellung der Beschichtungsmittel auf der Baustelle bzw. beim Produzenten der Trockenmörtelmischung als eine einzige Komponente eingesetzt werden können und nicht mehr als zwei separate Komponenten gehandhabt werden müssen. Dies vereinfacht die (Baustellen)Logistik.

Geeignete mineralische Bindemittel sind beispielsweise Zement, insbesondere Portlandzement, Aluminatzement, insbesondere Calcium-Sulfo-Aluminatzement, Trasszement, Hüttenzement, Magnesiazement, Phosphatzement, und Hochofenzement, sowie Mischzemente, Füllzemente, Flugasche, Microsilica, Hüttensand, Kalk oder Gips. Bevorzugte mineralische Bindemittel ist Zement, insbesondere Portlandzement, Aluminatzement, insbesondere Calcium-Sulfo-Aluminatzement, Trasszement, Hüttenzement, Magnesiazement, Phosphatzement, und Hochofenzement, sowie Mischzemente, Füllzemente.

Der Anteil von Aluminatzement beträgt vorzugsweise 0 bis 50 Gew.-%, besonders bevorzugt 0 bis 35 Gew.-%, ganz besonders bevorzugt 0 bis 25 Gew.-%, noch mehr bevorzugt 0 bis 10 Gew.-% und am meisten bevorzugt 0 bis 5 Gew.-%, bezogen auf das Gesamtgewicht der mineralischen Bindemittel. In einer besonders bevorzugten Ausführungsform enthalten die mineralischen Bindemittel keinen Aluminatzement.

Beispiele für geeignete Füllstoffe sind Quarzsand, Quarzmehl, Kalksteinmehl, Calciumcarbonat, Dolomit, Ton, Kreide, Weißkalkhydrat, Talkum oder Glimmer, Gummigranulat oder Hartfüllstoffe, wie Aluminiumsilicate, Korund, Basalt, Carbide, wie Siliciumcarbid oder Titancarbid, oder puzzolanisch reagierende Füllstoffe, wie Flugasche, Metakaolin, Mikrosilica. Bevorzugt werden als Füllstoffe Quarzsand, Quarzmehl, Kalksteinmehl, Calciumcarbonat, Calciummagnesiumcarbonat (Dolomit) oder Kreide. Vorzugsweise umfassen die Füllstoffe kein Kies. Kies hat im Allgemeinen mittlere Teilchendurchmesser von ≥ 4 mm.

Es können auch beliebige Gemische der genannten Füllstoffe eingesetzt werden. Bevorzugte Gemische umfassen ein oder mehrere silikatische Füllstoffe, wie Sand, und ein oder mehrere carbonatische Füllstoffe ausgewählt aus der Gruppe umfassend Calciumcarbonat, Kreide, Dolomit und Kalkstein. Bevorzugte Gemische enthalten ein oder mehrere silikatische Füllstoffe und ein oder mehrere carbonatische Füllstoffe im Verhältnis von 1 zu 1 bis 4 zu 1.

Die Füllstoffe haben vorzugsweise mittlere Teilchendurchmesser von 0,01 bis 4 mm, besonders bevorzugt 0,02 bis 3 mm und am meisten bevorzugt 0,03 bis 2 mm.

Vorzugsweise haben mindestens 50 bis 100 Gew.-% der Füllstoffe einen Durchmesser von 0,001 bis 0,5 mm; besonders bevorzugt haben mindestens 70 bis 100 Gew.-% der Füllstoffe einen Durchmesser von 0,01 bis 0,3 mm; jeweils bezogen auf das Trockengewicht der insgesamt eingesetzten Füllstoffe. In Folge der erfindungsgemäßen Teilchendurchmesser der Füllstoffe erleiden die Beschichtungsmittel im Zuge der Herstellung der dauerflexiblen Beschichtungen einen geringeren Schwund, was der Rissbildung innerhalb der dauerflexiblen Beschichtungen entgegenwirkt und der Rissüberbrückung förderlich ist.

Typische Rezepturen für die Beschichtungsmittel enthalten vorzugsweise 10 bis 60 Gew.-%, besonders bevorzugt 20 bis 55 Gew.-% und am meisten bevorzugt 30 bis 50 Gew.-% Polymere; vorzugsweise 2 bis 30 Gew.-%, besonders bevorzugt 2 bis 20 Gew.-% und am meisten bevorzugt 3 bis 15 Gew.-% mineralische Bindemittel; vorzugsweise 10 bis 80 Gew.-%, besonders bevorzugt 20 bis 70 Gew.-% und am meisten bevorzugt 40 bis 60 Gew.-% Füllstoffe; vorzugsweise 0,01 bis 5 Gew.-%, besonders bevorzugt 0,02 bis 3 Gew.-% und am meisten bevorzugt 0,05 bis 2 Gew.-% Flexibilisierer; wobei sich die Angaben in Gew.-% auf das Trockengewicht der Beschichtungsmittel beziehen und sich insgesamt auf 100 Gew.-% addieren.

Bezogen auf die Polymere sind die Flexibilisierer in den Beschichtungsmitteln zu vorzugsweise 0,025 bis 12,5 Gew.-%, besonders bevorzugt 0,05 bis 7,5 Gew.-% und am meisten bevorzugt 0,125 bis 5 Gew.-% enthalten.

Polymere sind in den Beschichtungsmitteln zu 60 bis 98 Gew.-% und bevorzugt 70 bis 98 Gew.-% enthalten, bezogen auf das Trockengewicht der Polymere und der mineralischen Bindemittel.

Die Beschichtungsmittel liegen vorzugsweise in Form von Trockenmischungen vor. Die Beschichtungsmittel werden im Allgemeinen direkt vor ihrer Applikation durch Zugabe von Wasser in wässrige Beschichtungsmittel überführt.

Wässrige Beschichtungsmittel enthalten vorzugsweise 15 bis 50 Gew.-% und besonders bevorzugt 20 bis 40 Gew.-% Wasser, bezogen auf das Trockengewicht der Beschichtungsmittel.

Die anwendungstechnischen Eigenschaften der Beschichtungsmittel können durch Additive oder Zusatzstoffe verbessert werden. Geeignete Additive sind beispielsweise Pigmente, insbesondere anorganische Pigmente, wie Oxid-, Oxidhydroxid-, Sulfid-, Sulfoselenid-, Carbonat-, Chromat-, Chromat-Molybdat-Mischphasen-, oder Silicat-Pigmente. Bevorzugte Pigmente sind hierbei Titan, Eisen, Chrom oder Cadmium enthaltende Pigmente. Die am meisten bevorzugten Pigmente sind Titandioxid.

Geeignete Additive sind beispielsweise hochdisperse Kieselsäuren, auch bekannt unter der Abkürzung HDK, wie beispielsweise pyrogene Kieselsäure oder gefällte Kieselsäure. Hochdisperse Kieselsäuren sind vorzugsweise zu 0,1 bis 3 und besonders bevorzugt zu 0,1 bis 1 Gew.-%, bezogen auf das Trockengewicht der jeweiligen Beschichtungsmittel, in den Beschichtungsmitteln enthalten. Durch Einsatz von hochdispersen Kieselsäuren kann das Eindringen von Wasser in die flexiblen Beschichtungen weiter unterbunden werden. Darüber hinaus wirken sich die hochdispersen Kieselsäuren auch auf die verarbeitungstechnischen Eigenschaften vorteilhaft aus, da entsprechende wässerige Beschichtungsmittel weniger klebrig sind und im Zuge des Abbindens der mineralischen Bindemittel schneller austrocknen.

Ein bevorzugtes Additiv sind auch Schichtsilikate, Schichtsilikate enthaltende Beschichtungsmittel führen zu flexiblen Beschichtungen mit einer höheren Dichtigkeit gegenüber Wasser, Schichtsilikate sind vorzugsweise zu 0 bis 3 Gew,-% und besonders bevorzugt zu 0,1 bis 2 Gew.-%, bezogen auf das Trockengewicht der Beschichtungsmittel, enthalten.

Bevorzugte Additive sind auch Fasern. Beispiele für geeignete Fasern sind Kevlar, Viskosefasern, Polyamidfasern, Polyesterfasern, Polyacrylnitrilfasern, Dralonfasern, Polyethylenfasern, Polypropylenfasern, Polyvinylalkoholfasern, Aramidfasern oder Kohlenstofffasern. Fasern sind vorzugsweise zu 0 bis 3 Gew. -% und besonders bevorzugt zu 0,1 bis 2 Gew.-%, bezogen auf das Trockengewicht der Beschichtungsmittel, enthalten. Der Einsatz von Fasern führt zu Beschichtungen mit stärker rissüberbrückenden Eigenschaften.

Übliche Zusatzstoffe für die Beschichtungsmittel sind Verdickungsmittel, beispielsweise Polysaccharide wie Celluloseether und modifizierte Celluloseether, Stärkeether, Guar Gum, Xanthan Gum, Polycarbonsäuren wie Polyacrylsäure und deren Teilester, sowie Polyvinylalkohole welche gegebenenfalls acetalisiert oder hydrophob modifiziert sein können, Casein und assoziativ wirkende Verdicker. Gängige Zusatzstoffe sind auch Vernetzer wie Metall- oder Halbmetalloxide, insbesondere Borsäure oder Polyborate, oder Dialdehyde, wie Glutardialdehyd. Darüberhinaus sind noch zu nennen: Konservierungsmittel, Filmbildehilfsmittel, Dispergiermittel, Schaumstabilisatoren, Entschäumer, Verflüssiger, Fließmittel und Flammschutzmittel (z.B. Aluminiumhydroxid).

Im Allgemeinen beträgt der Anteil an Zusatzstoffen an den Beschichtungsmitteln insgesamt 0 bis 20 Gew.-%, vorzugsweise 0,1 bis 15 Gew.-% und besondere bevorzugt 0,1 bis 10 Gew.-%, jeweils bezogen auf das Trockengewicht der Beschichtungsmittel.

Die Herstellung der Beschichtungsmittel auf Basis von mineralischen Bindemitteln, Polymeren, Füllstoffen und Flexibilisierern und gegebenenfalls Additiven ist an keine besondere Vorgehensweise oder Mischvorrichtung gebunden. Die Beschichtungsmittel sind erhältlich, indem die einzelnen Bestandteile der Rezeptur in herkömmlichen Pulvermischvorrichtungen, beispielsweise mittels Mörtel-, Beton-Mischer oder Putzmaschinen oder Rührern vermischt und homogenisiert werden. Die einzelnen Bestandteile werden beim Mischen im Allgemeinen in trockener Form eingesetzt.

Die Polymere können in Form von wässrigen Dispersionen, vorzugsweise in Form von in Wasser redispergierbaren Pulvern oder in Form von in Wasser redispergierbaren Dispersionspulverzusammensetzungen eingesetzt werden.

Die Beschichtungsmittel können beispielsweise in Form von Einkomponentensystemen oder Zweikomponentensystemen bereitgestellt werden. Einkomponentensysteme enthalten sämtliche Bestandteile der Beschichtungsmittel. Bei Einkomponentensystemen handelt es sich im Allgemeinen um Trockenformulierungen. Einkomponentensysteme werden vorzugsweise hergestellt, indem Polymere, Flexibilisierer, gegebenenfalls Additive und gegebenenfalls Zusatzstoffe vorgemischt werden und mineralische Bindemittel sowie Füllstoffe zu einem späteren Zeitpunkt beigemischt werden. Zur Herstellung der wässrigen Beschichtungsmittel kann das Wasser zu einem beliebigen späteren Zeitpunkt, im Allgemeinen kurz vor Applikation der Beschichtungsmittel, beigemischt werden.

Zweikomponentensysteme umfassen eine erste Komponente und eine zweite Komponente. Die erste Komponente enthält alle Bestandteile der flexiblen Beschichtungsmittel bis auf Polymere. Die erste Komponente ist im Allgemeinen eine Trockenformulierung. Die zweite Komponente enthält die Polymere, vorzugsweise in Form von wässrigen Dispersionen. Zur Herstellung der, gegebenenfalls wässrigen, Beschichtungsmittel werden die erste Komponente und die zweite Komponente gemischt, gegebenenfalls unter Zusatz von Wasser.

Die Beschichtungsmittel eignen sich beispielsweise zur Verwendung als Dichtungsschlämme, Baukleber, Fugenmörtel, Reparaturmörtel oder Putze.

Ein weiterer Gegenstand der Erfindung sind Verfahren zur Herstellung von dauerflexiblen Beschichtungen, indem Beschichtungsmittel auf Basis von einem oder mehreren mineralischen Bindemitteln, einem oder mehreren Polymeren, einem oder mehreren Füllstoffen und gegebenenfalls einem oder mehreren Additiven auf einen Untergrund appliziert werden, dadurch gekennzeichnet, dass die Beschichtungsmittel 0,05 bis 5 Gew.-%, bezogen auf das Trockengewicht der Beschichtungsmittel, an einem oder mehreren Flexibilisierern ausgewählt aus der Gruppe umfassend Hydroxy-Verbindungen mit 1 bis 25 Kohlenstoffatomen, Carbonsäure-Verbindungen mit 2 bis 10 Kohlenstoffatomen oder deren Salze, Hydroxy-Carbonsäure-Verbindungen mit 2 bis 10 Kohlenstoffatomen oder deren Salze, Phosphonsäuren oder deren Salze und Phosphorsäuren oder deren Salze, und 60 bis 98 Gew.-% Polymere, bezogen auf das Trockengewicht der Polymere und der mineralischen Bindemittel, enthalten.

Die dauerflexiblen Beschichtungen haben Schichtdicken von vorzugsweise 1 bis 10 mm, besonders bevorzugt 2 bis 5 mm und am meisten bevorzugt 2 bis 3 mm.

Die Beschichtungsmittel können dabei auf beliebige Untergründe appliziert werden. So können die Untergründe organischer oder anorganischer, natürlicher oder künstlicher Art sein. Beispiele für natürliche Untergründe sind Boden, Fels, Gestein oder Geröll. Beispiele für künstliche Untergründe sind vorwiegend Untergründe aus dem Baubereich, wie Substrate basierend auf Zusammensetzungen enthaltend mineralische Bindemittel, insbesondere Beton oder Estrich, aber auch Holz-, Kunststoffe, insbesondere Polyurethanschaumplatten, oder Metalle, insbesondere Aluminium. Untergründe aus dem Baubereich sind bevorzugt.

Die wässrigen Beschichtungsmittel können nach manuellen Verfahren oder maschinellen Verfahren appliziert werden. Bei Handverfahren werden die wässrigen Beschichtungsmittel mit Hilfe von Bürsten, Pinseln, Rollern, Spachteln, Kellen, Traufeln oder Schaufeln auf den Untergrund aufgebracht. Bei maschinellen Verfahren werden die wässrigen Beschichtungsmittel mittels Spritzmaschinen, Putzmaschinen oder Robotern auf den Untergrund aufgebracht. Es können mehrere Schichten von Beschichtungsmitteln übereinander aufgetragen werden. Vorzugsweise wird nur eine Schicht der Beschichtungsmittel auf einen Untergrund aufgetragen. Im Anschluss an den Auftrag von Beschichtungsmitteln auf die Untergründe kann die Oberfläche des Auftrags geglättet werden, beispielsweise unter Einsatz von Glättscheiben oder Flügelglättern.

Die Beschichtungsmittel werden üblicherweise bei Umgebungstemperaturen appliziert, d.h. im Allgemeinen bei Temperaturen von 0 bis 50°C, insbesondere von 5 bis 35°C.

Die Untergründe können vor Applikation der Beschichtungsmittel grundiert werden. Als Grundierungsmittel eignen sich beispielsweise wässrige Dispersionen der oben genannten Polymere, vorzugsweise mit Feststoffgehalten von 10 bis 50%.

Schließlich können auf die erfindungsgemäßen dauerflexiblen Beschichtungen weitere Schichten aufgebracht werden, wie beispielsweise Farbbeschichtungen oder Bekleidungen oder Beläge aus Fliesen bzw. Platten für den Innen- oder Außenbereich. Ebenso kommen Beschichtungen aus Bodenspachtelmassen oder Estrichen in Frage. Häufig bilden die erfindungsgemäßen Beschichtungen aber die oberste bzw. abschließende Schicht.

Die Beschichtungsmittel werden vorzugsweise zur Herstellung von dauerflexiblen Beschichtungen für Dächer, Kanäle, Minen, Tunnel, Teiche oder Schwimmbäder eingesetzt; besonders bevorzugt zur Herstellung von Dächern, Kanälen oder Minen; und am meisten bevorzugt zur Herstellung von Dächern.

Die erfindungsgemäßen Beschichtungsmittel führen überraschenderweise zu dauerflexiblen Beschichtungen, die gegenüber herkömmlichen, mineralischen Beschichtungen ein verbessertes Reißdehnungsverhalten und somit eine verbesserte Rissüberbrückung zeigen, was einer Versprödung der Beschichtungen entgegenwirkt. Diese Aussagen treffen insbesondere für Beschichtungen zu, die nassen oder feuchten Bedingungen ausgesetzt sind. Damit eignen sich die erfindungsgemäß erhältlichen Beschichtungen in besonderem Maße, um beispielsweise Bauwerke vor dem Eindringen von Wasser zu schützen.

Die folgenden Beispiele dienen der detaillierten Erläuterung der Erfindung und sind in keiner Weise als Einschränkung zu verstehen.

### Beispiel 1 (Bsp. 1):

Zur Herstellung des Beschichtungsmittels wurden die einzelnen Bestandteile der unten angegebenen Rezeptur in folgender Reihenfolge unter Mischen in einen Toni-Mischer (handelsüblicher Labormischer) gegeben: zuerst der Portlandzement, dann die Füllstoffe, das Dispersionspulver und schließlich die übrigen Additive. Anschließend wurde während 15 Minuten auf Stufe 1 homogen vermischt. Aus der so erhaltenen Trockenmischung wurde in Analogie zu EN 196-1 mit der in der Rezeptur angegebenen Wassermenge das wässrige Beschichtungsmittel hergestellt.

Das wässrige Beschichtungsmittel wurde auf Teflonschalungen (Grundfläche: 30 x 15 cm) mit einer Nassfilmstärke von 2 mm aufgebracht. Die nassen Filme wurden mit einer Traufel geglättet. Nach 24 Stunden Lagerung unter Normalbedingungen nach DIN50014 waren die Filme ausgehärtet und wurden nach Abziehen von den Teflonschalungen folgenden Lagerbedingungen unterworfen:
- ein Film wurde für 28 Tage bei Normklima (23°C/50% relative Luftfeuchtigkeit) gelagert (Trockenlagerung);
- ein anderer, identischer Film wurde im Anschluss an die vorgenannte Trockenlagerung für weitere 38 Tage in Leitungswasser bei 23°C und anschließend für 28 Tage bei Normklima (23°C/50% relative Luftfeuchtigkeit) gelagert (Nasslagerung).

Rezeptur des Beschichtungsmittels:
10 Gew.-% Portlandzement CEM I 42,5 N,
40 Gew.-% Dispersionspulver Vinnapas^{®} 4040 N (Vinylacetat-EthylenCopolymer, stabilisiert mit Polyvinylalkohol und einem kationischen Schutzkolloid),
0,5 Gew.-% hochdisperser Kieselsäure (Wacker HDK H 15),
0,5 Gew.-% Entschäumer (Agitan P 800),
1,5 Gew.-% anorganischer Schichtsilikatverdicker (Optibent MF),
0,5 Gew.-% Natriumgluconat,
13,4 Gew.-% Omyacarb 20 BG (carbonatischer Füllstoff) und
33,6 Gew.-% Sand (0,063 bis 0,3 mm; silikatischer Füllstoff).
Auf 2 kg Trockenmischung aus den vorgenannten Komponenten wurden 640 ml Wasser eingesetzt.

### Vergleichsbeispiel 2 (VBsp. 2):

Analog zu Beispiel 1, mit dem Unterschied, dass folgende Rezeptur und folgende Wassermenge zur Herstellung des Beschichtungsmittels eingesetzt wurde:
10 Gew.-% Portlandzement CEM I 42,5 N,
20,5 Gew.-% Dispersionspulver Vinnapas^{®} 4040 N (Vinylacetat-Ethylen-Copolymer, stabilisiert mit Polyvinylalkohol und einem kationischen Schutzkolloid),
20,5 Gew.-% Dispersionspulver Vinnapas^{®} 7055 N (Vinylacetat-Vinylester-Ethylen-Terpolymer, stabilisiert mit Polyvinylalkohol),
0,5 Gew.-% hochdisperser Kieselsäure (Wacker HDK H 15),
0,5 Gew.-% Entschäumer (Silfoam SP 15),
48 Gew.-% Sand (0,063 bis 0,3 mm; silikatischer Füllstoff).
Auf 2 kg Trockenmischung aus den vorgenannten Komponenten wurden 560 ml Wasser eingesetzt.

### Vergleichsbeispiel 3 (VBsp. 3):

Analog zu Beispiel 1, mit dem Unterschied, dass folgende Rezeptur und folgende Wassermenge zur Herstellung des Beschichtungsmittels eingesetzt wurde:
10 Gew.-% Portlandzement CEM I 42,5 N,
30 Gew.-% Dispersionspulver Vinnapas^{®} 4040 N (Vinylacetat-EthylenCopolymer, stabilisiert mit Polyvinylalkohol),
0,5 Gew.-% hochdisperser Kieselsäure (Wacker HDK H 15),
0,5 Gew.-% Entschäumer (Agitan P 800),
1,5 Gew.-% anorganischer Schichtsilikatverdicker (Optibent MF),
57,5 Gew.-% carbonatische und silikatische Füllstoffe.
Auf 2 kg Trockenmischung aus den vorgenannten Komponenten wurden 600 ml Wasser eingesetzt.

### Vergleichsbeispiel 4 (VBsp. 4):

Analog zu Beispiel 1, mit dem Unterschied, dass folgende Rezeptur und folgende Wassermenge zur Herstellung des Beschichtungsmittels eingesetzt wurde:
20 Gew.-% Portlandzement CEM I 42,5 N,
20 Gew.-% Dispersionspulver Vinnapas^{®} 4040 N (Vinylacetat-EthylenCopolymer, stabilisiert mit Polyvinylalkohol), ,
0,5 Gew.-% hochdisperser Kieselsäure (Wacker HDK H 15),
0,5 Gew.-% Entschäumer (Agitan P 800),
1,5 Gew.-% anorganischer Schichtsilikatverdicker (Optibent MF),
57,5 Gew.-% carbonatische und silikatische Füllstoffe.
Auf 2 kg Trockenmischung aus den vorgenannten Komponenten wurden 500 ml Wasser eingesetzt.

### Anwendungstechnische Austestung

Nach ISO 527-3 (8/1995) wurden aus dem jeweiligen, nach der Trocken- bzw. Nasslagerung erhaltenen Film des Beispiels 1 bzw. der Vergleichsbeispiele 2 bis 4 Normstäbe vom Typ 1 B ausgestanzt. Anschließend wurde die Reißfestigkeit bzw. Reißdehnung der Normstäbe mittels Zugversuch nach ISO 527-3 (8/1995) bestimmt. Die Normstäbe wurden mit einer Zuggeschwindigkeit von 50 mm/min bis zum Versagen gedehnt. Die Ergebnisse der Austestung sind in Tabelle 1 aufgeführt.

Überraschenderweise führt eine Nasslagerung des erfindungsgemäßen Produktes zu keiner signifikanten Veränderung des Reißdehnungswertes im Vergleich zur Trockenlagerung (Beispiel 1). Bei nicht erfindungsgemäß hergestellten Produkten verschlechtern sich die Reißdehnungswerte durch Nasslagerung dagegen dramatisch (Vergleichsbeispiele 2 und 3). Beschichtungsmittel, die keine größere Menge an Polymeren als an mineralischem Bindemittel enthalten, ergeben Produkte, deren Reißdehnung sogar bei Trockenlagerung unbefriedigend ist (Vergleichsbeispiel 4).

**Tabelle: Austestung der Beschichtungen:**

| | Reißfestigkeit [N/mm²] | | Reißdehnung [%] | |
|---|---|---|---|---|
| | Trockenlagerung | Nasslagerung | Trockenlagerung | Nasslagerung |
| Bsp. 1 | 1,2 | 2,5 | 48 | 46 |
| VBsp.2 | 1,6 | 3,1 | 62 | 33 |
| VBsp.3 | 1,7 | 2,5 | 29 | 8 |
| VBsp.4 | 1,7 | n.b.* | 7,3 | n.b.* |

| | | | | |
|---|---|---|---|---|
| *: n.b.: nicht bestimmt. | | | | |

## Patentansprüche

1. Beschichtungsmittel auf Basis von einem oder mehreren mineralischen Bindemitteln, einem oder mehreren Polymeren, einem oder mehreren Füllstoffen und gegebenenfalls einem oder mehreren Additiven, **dadurch gekennzeichnet, dass** die Beschichtungsmittel
0,05 bis 5 Gew.-%, bezogen auf das Trockengewicht der Beschichtungsmittel, an einem oder mehreren Flexibilisierern ausgewählt aus der Gruppe umfassend Hydroxy-Verbindungen mit 1 bis 25 Kohlenstoffatomen, Carbonsäure-Verbindungen mit 2 bis 10 Kohlenstoffatomen oder deren Salze, Hydroxy-Carbonsäure-Verbindungen mit 2 bis 10 Kohlenstoffatomen oder deren Salze, Phosphonsäuren oder deren Salze und Phosphorsäuren oder deren Salze, und
60 bis 98 Gew.-% Polymere, bezogen auf das Trockengewicht der Polymere und der mineralischen Bindemittel, enthalten.

2. Beschichtungsmittel gemäß Anspruch 1, **dadurch gekennzeichnet, dass** ein oder mehrere Flexibilisierer ausgewählt werden aus der Gruppe umfassend Oxalsäure, Weinsäure, Gluconsäure, Heptonsäure, Gallussäure, Zitronensäure, Bernsteinsäure, Sebacinsäure, Salicylsäure, Pimelinsäure, Hämatinsäure, Äpfelsäure sowie Salze der vorgenannten Säuren und Pentaerythrit, Sorbit, Sucrose, Glucose, Fructose, Disaccharide, Tetranatrium- und Tetrakaliumpyrophosphat und Natriumhexametaphosphat (Grahamsches Salz).

3. Beschichtungsmittel gemäß Anspruch 1 oder 2, **dadurch gekennzeichnet, dass** die Beschichtungsmittel 70 bis 98 Gew.-% Polymere, bezogen auf das Trockengewicht der Polymere und der mineralischen Bindemittel, enthalten.

4. Beschichtungsmittel gemäß Anspruch 1 bis 3, **dadurch gekennzeichnet, dass** die Polymere erhältlich sind durch radikalisch initiierte Polymerisation von einem oder mehreren ethylenisch ungesättigten Monomeren ausgewählt aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomeren.

5. Beschichtungsmittel gemäß Anspruch 1 bis 4, **dadurch gekennzeichnet, dass** die Beschichtungsmittel 10 bis 60 Gew. -% Polymere enthalten, bezogen auf das Trockengewicht der Beschichtungsmittel.

6. Beschichtungsmittel gemäß Anspruch 1 bis 5, **dadurch gekennzeichnet, dass** die Füllstoffe Gemische von einem oder mehreren silikatischen Füllstoffen und einem oder mehreren carbonatischen Füllstoffen umfassen.

7. Beschichtungsmittel gemäß Anspruch 1 bis 6, **dadurch gekennzeichnet, dass** die Beschichtungsmittel ein oder mehrere Additive ausgewählt aus der Gruppe umfassend hochdisperse Kieselsäuren, Schichtsilikate, Pigmente und Fasern enthalten.

8. Verwendung der Beschichtungsmittel aus Anspruch 1 bis 7 als Dichtungsschlämme, Baukleber, Fugenmörtel, Reparaturmörtel oder Putze.

9. Verwendung der Beschichtungsmittel nach Anspruch 8 zur Herstellung von Beschichtungen für Dächer, Kanäle, Minen, Tunnel, Teiche oder Schwimmbäder.

10. Verfahren zur Herstellung von Beschichtungen, **dadurch gekennzeichnet, dass** ein oder mehrere Beschichtungsmittel aus Anspruch 1 bis 7 auf einen Untergrund appliziert werden.

11. Verfahren zur Herstellung von Beschichtungen nach Anspruch 10, **dadurch gekennzeichnet, dass** die Beschichtungen Schichtdicken von 1 bis 10 mm haben.

12. In Wasser redispergierbare Dispersionspulverzusammensetzungen auf Basis von einem oder mehreren Polymeren von einem oder mehreren ethylenisch ungesättigten Monomeren (Basispolymerisate), **dadurch gekennzeichnet, dass** ein oder mehrere Flexibilisierer aus Anspruch 2 enthalten sind.

13. In Wasser redispergierbare Dispersionspulverzusammensetzungen gemäß Anspruch 12, **dadurch gekennzeichnet, dass** 0,025 bis 12,5 Gew.-% Flexibilisierer enthalten sind, bezogen auf das Gesamtgewicht der Dispersionspulverzusammensetzungen.

14. Verfahren zur Herstellung der in Wasser redispergierbaren Dispersionspulverzusammensetzungen gemäß Anspruch 12 bis 13 mittels radikalisch initiierter Emulsionspolymerisation oder Suspensionspolymerisation von einem oder mehreren ethylenisch ungesättigten Monomeren in wässrigem Medium und anschließendem Trocknen der dabei erhaltenen wässrigen Dispersionen, **dadurch gekennzeichnet, dass** ein oder mehrere Flexibilisierer gemäß Anspruch 2 beigemengt werden.

15. Verwendung der in Wasser redispergierbaren Dispersionspulverzusammensetzungen aus Anspruch 12 oder 13 als Polymer in den Beschichtungsmitteln gemäß Anspruch 1 bis 7.

## Claims

1. Coating compositions based on one or more mineral binders, one or more polymers, one or more fillers, and optionally one or more additives, **characterized in that** the coating compositions comprise
0.05% to 5% by weight, based on the dry weight of the coating compositions, of one or more flexibilizers selected from the group encompassing hydroxy compounds having 1 to 25 carbon atoms, carboxylic acid compounds having 2 to 10 carbon atoms, or salts thereof, hydroxy-carboxylic acid compounds having 2 to 10 carbon atoms, or salts thereof, phosphonic acids or salts thereof, and phosphoric acids or salts thereof, and
60% to 98% by weight of polymers, based on the dry weight of the polymers and of the mineral binders.

2. Coating compositions according to Claim 1, **characterized in that** one or more flexibilizers are selected from the group encompassing oxalic acid, tartaric acid, gluconic acid, heptonic acid, gallic acid, citric acid, succinic acid, sebacic acid, salicylic acid, pimelic acid, hematic acid, malic acid, and also salts of the aforementioned acids and pentaerythritol, sorbitol, sucrose, glucose, fructose, disaccharides, tetrasodium pyrophosphate and tetrapotassium pyrophosphate, and sodium hexametaphosphate (Graham's salt).

3. Coating compositions according to Claim 1 or 2, **characterized in that** the coating compositions comprise 70% to 98% by weight of polymers, based on the dry weight of the polymers and of the mineral binders.

4. Coating compositions according to Claim 1 to 3, **characterized in that** the polymers are obtainable by radically initiated polymerization of one or more ethylenically unsaturated monomers selected from the group encompassing vinyl esters, (meth)acrylic esters, vinylaromatics, olefins, 1,3-dienes and vinyl halides and optionally further monomers copolymerizable therewith.

5. Coating compositions according to Claim 1 to 4, **characterized in that** the coating compositions comprise 10% to 60% by weight of polymers, based on the dry weight of the coating compositions.

6. Coating compositions according to Claim 1 to 5, **characterized in that** the fillers comprise mixtures of one or more silicatic fillers and one or more carbonatic fillers.

7. Coating compositions according to Claim 1 to 6, **characterized in that** the coating compositions comprise one or more additives selected from the group encompassing highly disperse silicas, phyllosilicates, pigments and fibers.

8. Use of the coating compositions from Claim 1 to 7 as grouts, construction adhesives, jointing mortars, repair mortars or renders.

9. Use of the coating compositions according to Claim 8 for producing coatings for roofs, canals, mines, tunnels, ponds or swimming pools.

10. Process for producing coatings, **characterized in that** one or more coating compositions from Claim 1 to 7 are applied to a substrate.

11. Process for producing coatings according to Claim 10, **characterized in that** the coatings have coat thicknesses of 1 to 10 mm.

12. Water-redispersible dispersion powder compositions based on one or more polymers of one or more ethylenically unsaturated monomers (base polymers), **characterized in that** one or more flexibilizers from Claim 2 are present.

13. Water-redispersible dispersion powder compositions according to Claim 12, **characterized in that** 0.025% to 12.5% by weight of flexibilizers are present, based on the total weight of the dispersion powder compositions.

14. Process for preparing the water-redispersible dispersion powder compositions according to Claim 12 to 13 by means of radically initiated emulsion polymerization or suspension polymerization of one or more ethylenically unsaturated monomers in aqueous medium and subsequent drying of the resultant aqueous dispersions, **characterized in that** one or more flexibilizers according to Claim 2 are admixed.

15. Use of the water-redispersible dispersion powder compositions from Claim 12 or 13 as polymer in the coating compositions according to Claim 1 to 7.

## Revendications

1. Produits de revêtement à base d'un ou de plusieurs liants minéraux, d'un ou de plusieurs polymères, d'une ou de plusieurs charges et éventuellement d'un ou de plusieurs additifs, **caractérisés en ce que** les produits de revêtement contiennent
0,05 à 5 % en poids, par rapport au poids sec des produits de revêtement, d'un ou plusieurs flexibilisants choisis dans le groupe comprenant des composés hydroxylés ayant de 1 à 25 atomes de carbone, des composés de type acide carboxylique ayant de 2 à 10 atomes de carbone ou leurs sels, des composés de type acide hydroxycarboxylique ayant de 2 à 10 atomes de carbone ou leurs sels, des acides phosphoniques ou leurs sels et des acides phosphoriques ou leurs sels, et
60 à 98 % en poids de polymères, par rapport au poids sec des polymères et des liants minéraux.

2. Produits de revêtement selon la revendication 1, **caractérisés en ce qu'**un ou plusieurs flexibilisants sont choisis dans le groupe comprenant l'acide oxalique, l'acide d-tartrique, l'acide gluconique, l'acide heptonique, l'acide gallique, l'acide citrique, l'acide succinique, l'acide sébacique, l'acide salicylique, l'acide pimélique, l'acide hématinique, l'acide malique, ainsi que les sels des acides précités et le pentaérythritol, le sorbitol, le saccharose, le glucose, le fructose, les disaccharides, le pyrophosphate de tétrasodium et de tétrapotassium et l'hexamétaphosphate de sodium (sel de Graham).

3. Produits de revêtement selon la revendication 1 ou 2, **caractérisés en ce que** les produits de revêtement contiennent de 70 à 98 % en poids de polymères, par rapport au poids sec des polymères et des liants minéraux.

4. Produits de revêtement selon l'une quelconque des revendications 1 à 3, **caractérisés en ce que** les polymères peuvent être obtenus par polymérisation à amorçage radicalaire d'un ou de plusieurs monomères à insaturation éthylénique choisis dans le groupe comprenant des esters vinyliques, des esters d'acide (méth)acrylique, des composés vinylaromatiques, des oléfines, des 1,3-diènes et des halogénures de vinyle et éventuellement d'autres monomères copolymérisables avec ceux-ci.

5. Produits de revêtement selon l'une quelconque des revendications 1 à 4, **caractérisés en ce que** les produits de revêtement contiennent de 10 à 60 % en poids de polymères, par rapport au poids sec des produits de revêtement.

6. Produits de revêtement selon l'une quelconque des revendications 1 à 5, **caractérisés en ce que** les charges comprennent des mélanges d'une ou de plusieurs charges de type silicate et d'une ou de plusieurs charges de type carbonate.

7. Produits de revêtement selon l'une quelconque des revendications 1 à 6, **caractérisés en ce que** les produits de revêtement contiennent un ou plusieurs additifs choisis dans le groupe comprenant des silices hautement dispersées, des silicates lamellaires, des pigments et des fibres.

8. Utilisation des produits de revêtement selon l'une quelconque des revendications 1 à 7, en tant que suspensions d'étanchéité, colles pour le bâtiment, mortiers de jointoiement, mortiers de réparation ou enduits.

9. Utilisation des produits de revêtement selon la revendication 8, pour la production de revêtements pour toitures, canaux, mines, tunnels, pièces d'eau ou piscines.

10. Procédé pour la production de revêtements, **caractérisé en ce qu'**on applique sur un subjectile un ou plusieurs produits de revêtement de l'une quelconque des revendications 1 à 7.

11. Procédé pour la production de revêtements selon la revendication 10, **caractérisé en ce que** les revêtements ont des épaisseurs de couche de 1 à 10 mm.

12. Compositions de poudres de dispersions redispersables dans l'eau, à base d'un ou de plusieurs polymères d'un ou de plusieurs monomères à insaturation éthylénique (polymérisats de base), **caractérisées en ce que** sont contenus un ou plusieurs flexibilisants selon la revendication 2.

13. Compositions de poudres de dispersions redispersables dans l'eau selon la revendication 12, **caractérisées en ce que** sont contenus 0,025 à 12,5 % en poids de flexibilisants, par rapport au poids total des compositions de poudres de dispersions.

14. Procédé pour la préparation des compositions de poudres de dispersions redispersables dans l'eau selon l'une quelconque des revendications 12 et 13, par polymérisation en suspension ou polymérisation en émulsion à amorçage radicalaire d'un ou de plusieurs monomères à insaturation éthylénique en milieu aqueux et séchage subséquent des dispersions aqueuses ainsi obtenues, **caractérisé en ce**
**qu'**on ajoute un ou plusieurs flexibilisants selon la revendication 2.

15. Utilisation des compositions de poudres de dispersions redispersables dans l'eau selon la revendication 12 ou 13, en tant que polymère dans les produits de revêtement selon l'une quelconque des revendications 1 à 7.
